# FASCICULE DE BREVET EUROPEEN

(11) **EP 1 459 240 B1**
(45) Date de publication et mention de la délivrance du brevet: **22.02.2006**
(21) Numéro de dépôt: 02804925.2
(22) Date de dépôt: 13.12.2002
(51) Int. Cl.: G06K 7/00

(54) **LECTEUR DE CIRCUIT INTEGRE SANS CONTACT COMPRENANT UN MODE DE VEILLE ACTIVE A FAIBLE CONSOMMATION ELECTRIQUE**
KONTAKTLOSER INTEGRIERTER SCHALTUNGSLESER MIT EINEM AKTIV-BEREITSCHAFTS-MODUS MIT NIEDRIGER STROMAUFNAHME
NON-CONTACT INTEGRATED CIRCUIT READER COMPRISING A LOW POWER CONSUMPTION ACTIVE STANDBY MODE

(30) Priorité: 18.12.2001 FR 0116329
(43) Date de publication de la demande: 22.09.2004
(73) Titulaire: Inside Contactless, 13856 Aix en Provence Cedex 3 (FR)
(72) Inventeur: CHARRAT, Bruno, 2 Lot. des Marroniers, 13090 Aix En Provence (FR)
(74) Mandataire: Marchand, André
(86) Numéro de dépôt international: PCT/FR2002/004361
(87) Numéro de publication internationale: WO 2003/052672

(56) Documents cités:
- EP-A- 0 391 559
- FR-A- 2 780 585

## Description

La présente invention concerne le domaine des transmissions de données par couplage inductif.

La présente invention concerne notamment les lecteurs de circuits intégrés sans contact, utilisés pour échanger des données avec des objets portatifs électroniques comportant un circuit intégré sans contact, comme les cartes à puce sans contact, les étiquettes électroniques sans contact, les badges électroniques sans contacts,...

Plus particulièrement, la présente invention concerne un lecteur de circuit intégré sans contact comprenant une bobine d'antenne pour émettre un champ magnétique oscillant, et des moyens de détection de la présence d'un circuit intégré sans contact dans un périmètre de communication du lecteur sans réception d'un message d'identification.

La présente invention concerne également un procédé pour détecter la présence d'un circuit intégré sans contact dans un périmètre de communication d'un lecteur de circuit intégré sans contact, sans réception d'un message d'identification.

Ces dernières années, les circuits intégrés sans contact ont connu un important développement et les méthodes de transmission de données par couplage inductif font aujourd'hui l'objet de divers protocoles dont certains sont normalisés, par exemple ceux décrits par les normes ISO/IEC 15693 et ISO/IEC 14443.

Ces protocoles comprennent des dispositions permettant à un lecteur de détecter la présence d'un circuit intégré sans contact dans son périmètre de communication, afin d'engager une communication. De telles dispositions consistent souvent dans une requête en identification devant être émise répétitivement par le lecteur. Sur réception d'une telle requête, le circuit intégré présent dans le champ d'interrogation du lecteur renvoie un message d'identification. Le message d'identification peut être personnalisé et comprendre un numéro d'identification du circuit intégré, comme son numéro de série ou tout autre identifiant. Le message d'identification peut également être un simple signal d'identification anonyme, par exemple une période de modulation de l'amplitude du champ magnétique faite par modulation de charge. Dans les applications dans lesquelles de nombreux circuits intégrés sans contact sont susceptibles de se trouver simultanément dans le périmètre de communication d'un lecteur, la requête en identification est associée à un protocole anti-collision permettant la sélection d'un circuit intégré et d'un seul.

Cette méthode de détection/identification de circuit intégré nécessite que le lecteur émette en permanence un champ magnétique alternatif ou, à tout le moins, qu'il émette des salves de champ magnétique d'une durée suffisante pour permettre l'envoi de la requête en identification et la réception du message d'identification, ou au moins des salves de champ magnétique d'une durée suffisante pour que le circuit intégré puisse extraire une tension d'alimentation et consomme de l'énergie en affaiblissant ainsi le champ magnétique émis, comme cela est par exemple proposé dans la demande EP 391 559.

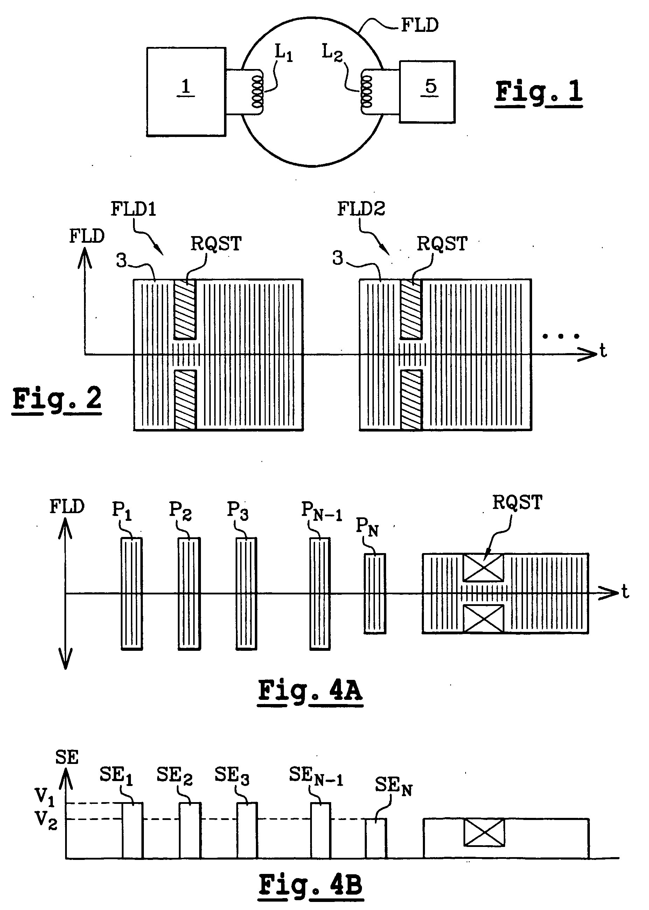

Pour fixer les idées, la figure 1 représente schématiquement un lecteur 1 équipé d'une bobine d'antenne L1 émettant un champ magnétique FLD, oscillant par exemple à 13,56 MHz ou 125 KHz (fréquences souvent utilisées). En regard du lecteur se trouve un circuit intégré sans contact 5 équipé d'une bobine d'antenne L2. La figure 2 représente la forme générale du champ magnétique. Le lecteur envoie ici des salves de champ magnétique FLD1, FLD2,... chaque salve durant au moins une milliseconde. La fréquence porteuse du champ magnétique est schématisée par des traits verticaux. L'enveloppe 3 du champ magnétique présente une période de modulation d'amplitude pendant l'envoi de la requête 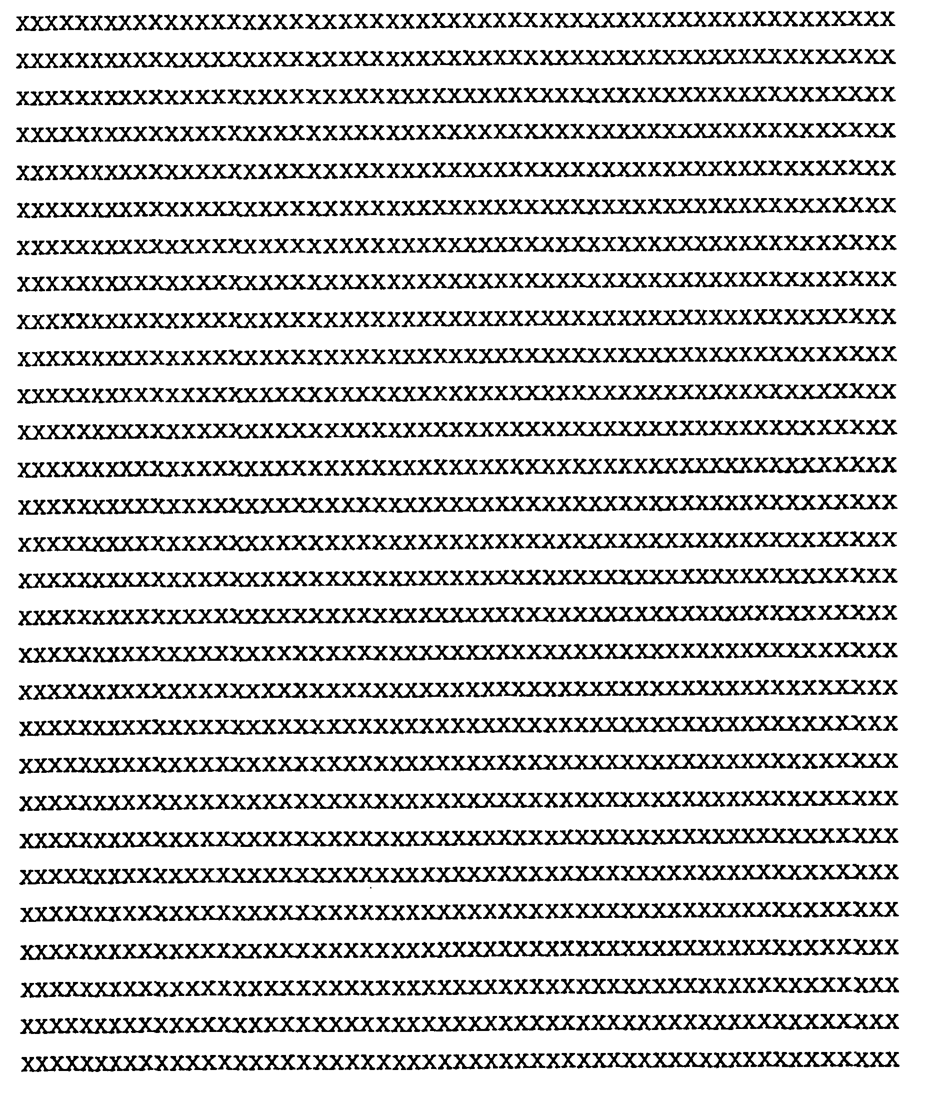 RQST, selon un profil de modulation qui est déterminé par le protocole utilisé, représenté sur la figure par une zone en traits hachurés.

Cette méthode de détection/identification de circuit intégré sans contact implique une consommation de courant non négligeable par le lecteur, pour l'émission du champ magnétique. De ce fait, elle ne convient pas aux applications où il est souhaité que le lecteur présente une faible consommation de courant lorsque aucun circuit intégré ne se trouve dans le champ d'interrogation. Ces applications concernent notamment les lecteurs alimentés par une batterie ou par une pile électrique.

Selon d'autres protocoles de communication, un circuit intégré sans contact envoie spontanément un message d'identification lorsqu'il détecte la présence d'un champ magnétique émis par un lecteur. Ce mode de détection par identification spontanée implique également une consommation de courant non négligeable car le lecteur doit émettre un champ magnétique permanent ou des salves de champ magnétique d'une durée suffisante pour activer le circuit intégré et lui permettre d'envoyer le message d'identification (pouvant consister en un simple signal d'identification, comme indiqué plus haut).

Afin de pallier cet inconvénient, on connaît une méthode de détection de circuit intégré faisant intervenir un émetteur/récepteur infrarouge. En dehors des périodes de communication, le lecteur est placé dans un état de veille active où il n'émet aucun champ magnétique et surveille seulement le signal reçu par le capteur infrarouge. Lorsqu'un circuit intégré sans contact (solidaire d'un objet portatif) se trouve dans le champ de rayonnement infrarouge, le lecteur détecte une modulation du niveau de réception infrarouge et bascule dans un mode actif, où il émet le champ magnétique (par salves ou de façon permanente, avec ou sans requête en identification). Si aucun message d'identification n'est reçue après un nombre déterminé de requêtes ou de salves, le lecteur repasse en mode de veille active.

Toutefois, cette méthode nécessite d'avoir recours à un système de détection infrarouge complexe à mettre en oeuvre, qui grève le prix de revient du lecteur. En outre une détection infrarouge n'apporte pas entière satisfaction du fait que le faisceau infrarouge ne couvre qu'une portion de l'espace autour du lecteur.

Ainsi, la présente invention vise un moyen permettant de détecter un circuit intégré sans contact sans réception d'un message d'identification et sans utiliser un détecteur infrarouge.

Pour atteindre cet objectif, la présente invention repose sur la constatation que l'amplitude du champ magnétique émis par un lecteur se trouve sensiblement altérée lorsque la bobine d'antenne d'un circuit intégré sa trouve dans le périmètre de communication du lecteur. En effet, lorsqu'un circuit intégré sans contact se trouve à proximité du lecteur, la bobine d'antenne du circuit intégré interfère avec la bobine du lecteur (apparition d'une mutuelle inductance) ce qui désaccorde sensiblement le circuit d'antenne du lecteur. D'autre part, il est connu que l'amplitude du champ magnétique est aisée à surveiller par extraction dans la bobine d'antenne d'un signal d'enveloppe. Ainsi, l'idée de l'invention est d'émettre des impulsions de champ magnétique de courte durée, n'entraînant qu'une consommation de courant négligeable, et d'observer l'amplitude du signal d'enveloppe. Si à un instant donné, l'amplitude du signal d'enveloppe présente une variation supérieure à un seuil déterminé ou un affaiblissement déterminé, cela signifie, selon l'invention, qu'un circuit intégré sans contact vient de pénétrer dans le périmètre de communication du lecteur.

Ainsi, la présente invention est réalisée par un lecteur selon la revendication 1 et par un procédé selon la revendication 10.

Selon un mode de réalisation, les moyens de surveillance comprennent des moyens pour comparer des variations d'amplitude des impulsions d'enveloppe à un seuil de variation déterminé, un circuit intégré sans contact étant présumé détecté lorsque l'amplitude des impulsions d'enveloppe présente une variation supérieure au seuil de variation déterminé.

Selon un mode de réalisation, les moyens de surveillance comprennent des moyens pour comparer l'amplitude des impulsions d'enveloppe supérieure à un seuil d'amplitude déterminé, un circuit intégré sans contact étant présumé détecté lorsque l'amplitude d'au moins une impulsion d'enveloppe devient inférieure au seuil d'amplitude déterminé.

Selon un mode de réalisation, les moyens de surveillance comprennent des moyens pour générer un signal de référence d'amplitude déterminée,' et - des moyens pour comparer l'amplitude des impulsions d'enveloppe au signal de référence.

Selon un mode de réalisation, les moyens pour générer le signal de référence comprennent des moyens pour générer une valeur d'amplitude numérique et un convertisseur analogique numérique pour transformer la valeur d'amplitude numérique en un signal analogique formant le signal de référence.

Selon un mode de réalisation, le lecteur comprend des moyens pour ajuster l'amplitude du signal de référence en l'absence du circuit intégré sans contact à détecter.

Selon un mode de réalisation, les moyens pour ajuster l'amplitude du signal de référence sont agencés pour ajuster l'amplitude du signal de référence pendant l'émission d'impulsions de champ magnétique de courte durée.

Selon un mode de réalisation, les moyens pour ajuster l'amplitude du signal de référence sont agencés pour ajuster l'amplitude du signal de référence de manière que celle-ci soit sensiblement inférieure à celle des impulsions d'enveloppe.

Selon un mode de réalisation, les moyens pour générer le signal de référence comprennent un condensateur et des moyens pour charger le condensateur à partir des impulsions d'enveloppe.

Selon un mode de réalisation, le lecteur comprend un convertisseur analogique/numérique pour convertir les impulsions d'enveloppe en un signal d'amplitude numérique comprenant des valeurs d'amplitude représentatives de l'amplitude des impulsions d'enveloppe, et des moyens de surveillance du signal d'amplitude numérique.

Selon un mode de réalisation, les moyens de surveillance sont agencés pour comparer des variations du signal d'amplitude numérique à un seuil de variation numérique.

Selon un mode de réalisation, les moyens de surveillance sont agencés pour comparer le signal d'amplitude numérique à un seuil d'amplitude numérique.

Selon un mode de réalisation, les moyens de surveillance sont agencés pour ajuster le seuil de variation numérique ou le seuil d'amplitude numérique en l'absence du circuit intégré à détecter.

Selon un mode de réalisation, les moyens de surveillance sont agencés pour ajuster le seuil de variation d'amplitude numérique ou le seuil d'amplitude numérique en calculant une valeur moyenne de valeurs d'amplitude.

Selon un mode de réalisation, les moyens de surveillance sont agencés pour ajuster le seuil de variation d'amplitude numérique ou le seuil d'amplitude numérique pendant l'émission d'impulsions de champ magnétique de courte durée.

Selon un mode de réalisation, les moyens de surveillance sont agencés pour ajuster en temps réel le seuil de variation numérique ou le seuil d'amplitude numérique en utilisant les valeurs d'amplitude des impulsions d'enveloppe correspondant à N dernières impulsions de champ magnétique émises.

Selon un mode de réalisation, les moyens pour extraire le signal d'enveloppe forment une partie d'un circuit de réception de données du lecteur.

Selon un mode de réalisation, le lecteur présente un mode de veille active à faible consommation électrique dans lequel le lecteur émet continuellement des impulsions de champ magnétique de courte durée et détermine à chaque impulsion si le circuit intégré est détecté ou non.

Selon un mode de réalisation, une impulsion de champ magnétique de courte durée présente une durée inférieure à une salve de champ magnétique permettant au circuit intégré sans contact d'envoyer un message d'identification.

Selon un mode de réalisation, une impulsion de champ magnétique de courte durée présente une durée inférieure à 100 microsecondes.

La présente invention concerne également un procédé pour détecter la présence d'un circuit intégré sans contact dans un périmètre de communication d'un lecteur de circuit intégré sans contact, sans réception d'un message d'identification, le lecteur comprenant une bobine d'antenne pour émettre un champ magnétique oscillant, comprenant les étapes consistant à émettre des impulsions de champ magnétique de courte durée, extraire de la bobine d'antenne un signal d'enveloppe présentant des impulsions d'enveloppe correspondant aux impulsions de champ magnétique, et surveiller l'amplitude des impulsions d'enveloppe pour détecter une variation de l'amplitude des impulsions d'enveloppe représentative de l'entrée du circuit intégré sans contact dans le périmètre de communication du lecteur.

Selon un mode de réalisation, un circuit intégré sans contact est présumé détecté lorsque l'amplitude des impulsions d'enveloppe présente une variation supérieure à un seuil de variation déterminé.

Selon un mode de réalisation, un circuit intégré sans contact est présumé détecté lorsque l'amplitude d'au moins une impulsion d'enveloppe devient inférieure à un seuil d'amplitude déterminé.

Selon un mode de réalisation, le procédé comprend les étapes suivantes : générer un signal de référence d'amplitude déterminée, et comparer l'amplitude des impulsions d'enveloppe au signal de référence.

Selon un mode de réalisation, le procédé comprend une étape d'ajustement de l'amplitude du signal de référence en l'absence du circuit intégré sans contact à détecter.

Selon un mode de réalisation, l'étape d'ajustement est faite pendant l'émission d'au moins une impulsion de champ magnétique de courte durée.

Selon un mode de réalisation, l'amplitude du signal de référence est ajustée de manière que celle-ci soit sensiblement inférieure à celle que présente le signal d'enveloppe.

Selon un mode de réalisation, le signal de référence est une tension prélevée sur une borne d'un condensateur chargé au moyen des impulsions d'enveloppe.

Selon un mode de réalisation, le signal de référence est généré par transformation, au moyen d'un convertisseur analogique numérique, d'une valeur d'amplitude numérique.

Selon un mode de réalisation, le procédé comprend les étapes consistant à convertir les impulsions d'enveloppe en un signal d'amplitude numérique comprenant des valeurs d'amplitude représentatives de l'amplitude des impulsions d'enveloppe, et surveiller le signal d'amplitude numérique en comparant des variations du signal d'amplitude numérique à un seuil de variation numérique ou en comparant le signal d'amplitude numérique à un seuil d'amplitude numérique.

Selon un mode de réalisation, le seuil de variation numérique ou le seuil d'amplitude numérique est ajusté en l'absence du circuit intégré à détecter.

Selon un mode de réalisation, l'ajustement du seuil de variation d'amplitude numérique ou du seuil d'amplitude numérique comprend le calcul d'une valeur moyenne de valeurs d'amplitude.

Selon un mode de réalisation, le seuil de variation d'amplitude numérique ou le seuil d'amplitude numérique est ajusté pendant l'émission d'impulsions de champ magnétique de courte durée.

Selon un mode de réalisation, le seuil de variation numérique ou le seuil d'amplitude numérique est ajusté en temps réel en utilisant les valeurs d'amplitude des impulsions d'enveloppe correspondant à N dernières impulsions de champ magnétique émises.

Selon un mode de réalisation, le procédé comprend l'émission continuelle d'impulsions de champ magnétique de courte durée pour la détection du circuit intégré.

Selon un mode de réalisation, une impulsion de champ magnétique de courte durée présente une durée inférieure à une salve de champ magnétique permettant au circuit intégré sans contact d'envoyer un message d'identification.

Selon un mode de réalisation, une impulsion de champ magnétique de courte durée présente une durée inférieure à 100 microsecondes.

Ces objets, caractéristiques et avantages ainsi que d'autres de la présente invention seront exposés plus en détail dans la description suivante du procédé de l'invention, d'un exemple de réalisation d'un lecteur selon l'invention, et de divers exemples de réalisation d'un circuit de surveillance selon l'invention, faite à titre non limitatif en relation avec les figures jointes parmi lesquelles :
- la figure 1 précédemment décrite représente schématiquement un lecteur de circuit intégré sans contact et un circuit intégré sans contact,
- la figure 2 précédemment décrite représente l'allure du champ magnétique émis par un lecteur lors de l'envoi d'une requête en identification,
- la figure 3 représente l'architecture générale d'un lecteur selon l'invention,
- la figure 4A représente des impulsions de champ magnétique émises par le lecteur, et la figure 4B représente le profil d'un signal d'enveloppe apparaissant lors de l'émission de ces impulsions,
- la figure 5 illustre un phénomène de mutuelle inductance sur lequel repose le procédé de l'invention,
- la figure 6 représente un premier mode de réalisation d'un circuit de surveillance selon l'invention,
- les figures 7A et 7B représentent des signaux électriques illustrant le fonctionnement du circuit de surveillance de la figure 6,
- la figure 8 représente un second mode de réalisation d'un circuit de surveillance selon l'invention,
- les figures 9A et 9B représentent des signaux électriques illustrant le fonctionnement du circuit de surveillance de la figure 8,
- la figure 10 représente un premier mode de réalisation d'un circuit de surveillance selon l'invention, et
- la figure 11 représente des signaux électriques illustrant exemple de mise en oeuvre du procédé de l'invention au moyen du circuit de la figure 10.

Le procédé selon l'invention sera décrit dans ce qui suit en relation avec un exemple d'architecture classique de lecteur de circuit intégré sans contact, représenté en figure 3 et décrit à titre d'exemple non limitatif de mise en oeuvre de l'invention.

Le lecteur 10 représenté comprend un microprocesseur MP, une mémoire programme MEM, un circuit d'antenne 20, un circuit d'émission de données 30 et un circuit de réception de données 40.

Le circuit d'antenne 20 est accordé sur une fréquence de résonance déterminée, par exemple 13,56 MHz, et comprend une bobine d'antenne L1 connectée en parallèle avec un condensateur C1 pour former un circuit L1C1. Le circuit L1C1 présente une borne connectée à un noeud 21 et l'autre borne connectée à la masse. Le noeud 21 est connecté à une extrémité d'un condensateur C2 dont l'autre extrémité est connectée à la sortie du circuit d'émission de données 30. Le noeud 21 est également connecté à l'entrée du circuit de réception de données 40.

Le circuit d'émission de données 30 comprend un oscillateur OSC délivrant un signal de modulation primaire Smp oscillant à une fréquence porteuse Fc, ici 13,56 MHz, qui est appliqué sur une entrée d'un circuit modulateur MODC. Une autre entrée du circuit modulateur MODC est reliée à un port PT1 du microprocesseur pour recevoir des données DTx à émettre. Le circuit MODC délivre un signal de modulation d'amplitude Sm appliqué à l'entrée d'un amplificateur AMP1. La sortie de l'amplificateur AMP1 forme la sortie du circuit 30 et est connectée au condensateur C2 du circuit d'antenne.

Le circuit de réception de données 40 comprend en entrée une diode de redressement D1 dont l'anode est connectée au noeud 21 du circuit d'antenne et reçoit un signal d'antenne. La cathode de la diode D1 est reliée à un filtre basse-bas F1 prévu pour éliminer la porteuse Fc présente dans le signal d'antenne redressé, le filtre F1 présentant par exemple une fréquence de coupure de 1 MHz pour une porteuse de 13,56 MHz. Sur la cathode de la diode D1 se trouve ainsi un signal d'enveloppe SE qui est appliqué à l'entrée d'un amplificateur AMP2 par l'intermédiaire d'un condensateur C3. La sortie de l'amplificateur AMP2 délivre des données DTr envoyées au lecteur par modulation de charge, et est reliée à un port PT2 du microprocesseur, chargé de décoder les données DTr. Un filtre F2, de type passe-bande ou passe-haut, peut être prévu à la sortie de l'amplificateur AMP2 pour supprimer une sous-porteuse de modulation de charge, quand le protocole de communication prévoit l'utilisation d'une telle sous-porteuse pour l'émission de données dans le sens circuit intégré sans contact vers lecteur.

Pour illustrer le fonctionnement du lecteur 10, qui est en soi bien connu de l'homme de l'art, la figure 3 représente en regard du lecteur un circuit intégré sans contact 5 équipé d'une bobine d'antenne L2, le circuit intégré se trouvant dans le périmètre de communication du lecteur. La bobine d'antenne 20 délivre un champ magnétique oscillant. Lorsque des données DTx doivent être envoyées au circuit intégré 5, le lecteur module l'amplitude du champ en fonction des données DTx, qui peuvent être codées. Lorsque des données DTr doivent être envoyées au lecteur par le circuit intégré 5, le circuit intégré court-circuite sa bobine L2 (court-circuit total ou partiel) au moyen d'un interrupteur SW, au rythme des données à émettre DTr (qui peuvent être combinées avec une sous-porteuse comme signalé plus haut). Les courts-circuits de bobine se répercutent par couplage inductif dans le circuit d'antenne 20 du lecteur, sous forme d'une modulation de charge entraînant une modulation de l'amplitude du signal d'antenne qui se retrouve dans le signal d'enveloppe SE.

Comme indiqué plus haut, l'attente d'un message d'identification en provenance du circuit intégré sans contact, avec ou sans envoi préalable d'une requête en identification, nécessite d'émettre le champ magnétique de façon permanente ou sous forme de salves d'une durée non négligeable.

Pour pallier cet inconvénient, la présente invention prévoit de programmer le lecteur 10 de sorte que celui-ci présente un mode de veille active dans lequel il émet des impulsions de champ magnétique de courte durée et surveille le signal d'enveloppe.

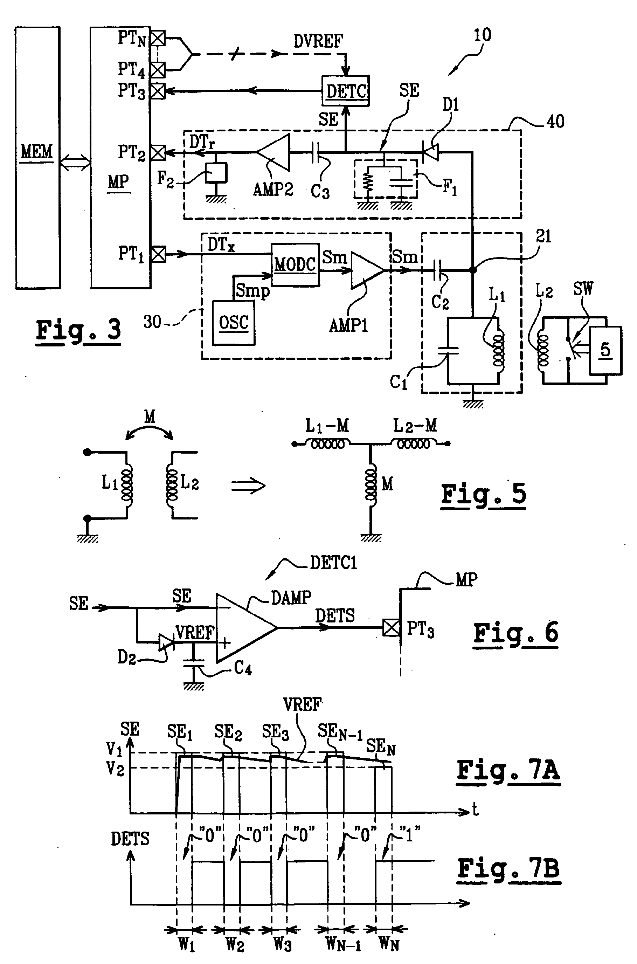

Pour fixer les idées, la figure 5A représente une suite d'impulsions de champ magnétique P1, P2, P3... P_{N-1}, P_{N} selon l'invention, et la figure 5B représente le profil du signal d'enveloppe SE pendant les périodes d'émission des impulsions. Le signal d'enveloppe SE recopie les impulsions P1 à P_{N} et présente ainsi lui-même des impulsions SE1, SE2...SE_{N-1}, SE_{N}, ou impulsions d'enveloppe.

Les impulsions de champ magnétique sont d'une durée Ti très inférieure à celle des salves classiques de champ magnétique, par exemple de l'ordre de 10 à 50 µs. Elles sont espacées les unes des autres d'une durée Ts nettement supérieure à leur durée propre, par exemple 200 ms. Ainsi, la consommation moyenne du circuit d'antenne est égale à la consommation que présente le circuit d'antenne pendant l'émission continue du champ magnétique divisée par le rapport Ts/Ti, soit une consommation réduite par un facteur de 2000 à 4000 pour des impulsions de 10 à 50 µs espacées de 200 ms. On constate en pratique que même des impulsions plus longues, par exemple de 100 µs, permettent d'obtenir une très faible consommation moyenne de courant et de conférer une grande autonomie à un lecteur alimenté par piles.

En l'absence du circuit intégré sans contact 5, les impulsions d'enveloppe SE1, SE2...SE_{N-1}, SE_{N} présentent une amplitude V1 sensiblement constante. En présence du circuit intégré sans contact, les impulsions d'enveloppe présentent une amplitude V2 sensiblement inférieure à V1. Ceci est illustré sur les figures 4A et 4B, où l'on suppose que le circuit intégré sans contact 5 pénètre dans le périmètre de communication du lecteur entre l'impulsion P_{N-1} et l'impulsion P_{N}. L'amplitude du champ magnétique est sensiblement diminuée ainsi que, par conséquent, celle de l'impulsion d'enveloppe SE_{N}. Ce phénomène est dû à l'apparition d'une mutuelle inductance M entre la bobine L1 du lecteur et la bobine L2 du circuit intégré, comme illustré en figure 5. La bobine L1 devient égale à une inductance de valeur L1-M en série avec une inductance de valeur M, ce qui désaccorde légèrement le circuit d'antenne et affaiblit le champ magnétique.

Il doit être noté qu'une telle perturbation de l'amplitude du champ magnétique se produit également lorsqu'un deuxième circuit intégré sans contact apparaît dans le périmètre de communication, par rapport à l'amplitude que présente le signal d'antenne en présence d'un premier circuit intégré sans contact. Ainsi, bien que l'on considère dans ce qui suit le cas où un premier circuit intégré pénètre dans le périmètre de communication du lecteur, l'invention concerne tout aussi bien le cas ou un second circuit intégré pénètre dans le périmètre de communication, voire un troisième circuit intégré, etc..

Comme représenté en figure 3, le lecteur 10 est équipé d'un circuit de surveillance DETC présentant une sortie connectée à un port PT3 du microprocesseur et une entrée connectée à l'anode de la diode D1 du circuit 40 pour recevoir le signal d'enveloppe SE. L'entrée du circuit DETC pourrait toutefois être connecté à tout autre moyen d'extraction du signal d'enveloppe SE, par exemple une diode supplémentaire connectée au circuit d'antenne 20, un capteur de courant agencé dans le circuit d'antenne, etc..

Trois exemples de réalisation du circuit DETC sont représentés sur les figures 6, 8 et 10 et sont respectivement référencés DETC1, DETC2, et DETC3.

Dans le mode de réalisation représenté en figure 6, le circuit DETC1 comprend un amplificateur différentiel DAMP agencé en comparateur, un condensateur C4 et une diode D2. L'amplificateur DAMP délivre un signal de détection DETS. Le condensateur C4 a sa cathode reliée à la masse et reçoit sur son anode, par l'intermédiaire de la diode D2, le signal d'enveloppe SE, diminué de quelques dixièmes de Volt en raison de la chute de tension dans la diode D2. L'amplificateur DAMP reçoit sur son entrée négative le signal d'enveloppe SE. Son entrée positive reçoit un signal de référence VREF prélevé sur l'anode du condensateur C2 et égal à la tension de charge du condensateur.

La figure 7A illustre l'aspect des signaux SE et VREF lors de l'émission des impulsions de champ magnétique P1, P2... P_{N-1}, P_{N} (fig. 4A). Le signal SE présente les impulsions SE1, SE2... SE_{N-1,} SE_{N} déjà illustrées en figure 4B, l'impulsion SE_{N} étant d'une amplitude V2 inférieure à l'amplitude V1 des impulsions SE1 à SE_{N-1} en raison de la présence de la bobine L2 du circuit intégré sans contact. Le condensateur se recharge à chaque nouvelle impulsion d'enveloppe et se décharge faiblement entre deux impulsions, de telle sorte que le signal VREF présente une valeur moyenne comprise entre V1 et V2. Lorsque l'impulsion SE_{N} d'amplitude V2 apparaît, le signal VREF est supérieur à l'amplitude V2 de sorte que le signal DETS est à 1 au lieu d'être à 0, comme représenté en figure 7B.

La mise en oeuvre du procédé de l'invention et du détecteur DETC1 implique une programmation correspondante du microprocesseur, au moyen d'un programme de gestion du mode de veille active chargé dans la mémoire programme MEM. Cette opération de programmation étant en soi à la portée de l'homme de l'art, elle ne sera pas décrite. Il découle de ce qui précède que le microprocesseur doit observer le signal DETS sur le port PT3 pendant que sont émises les impulsions de champ magnétique P1 à P_{N}, ce qui définit des fenêtres W1, W2...W_{N-1}, W_{N} de surveillance du signal DETS. La valeur du signal DETS en dehors des fenêtres de surveillance n'est pas prise en compte et n'est pas significative, du fait que le signal d'enveloppe SE est nul.

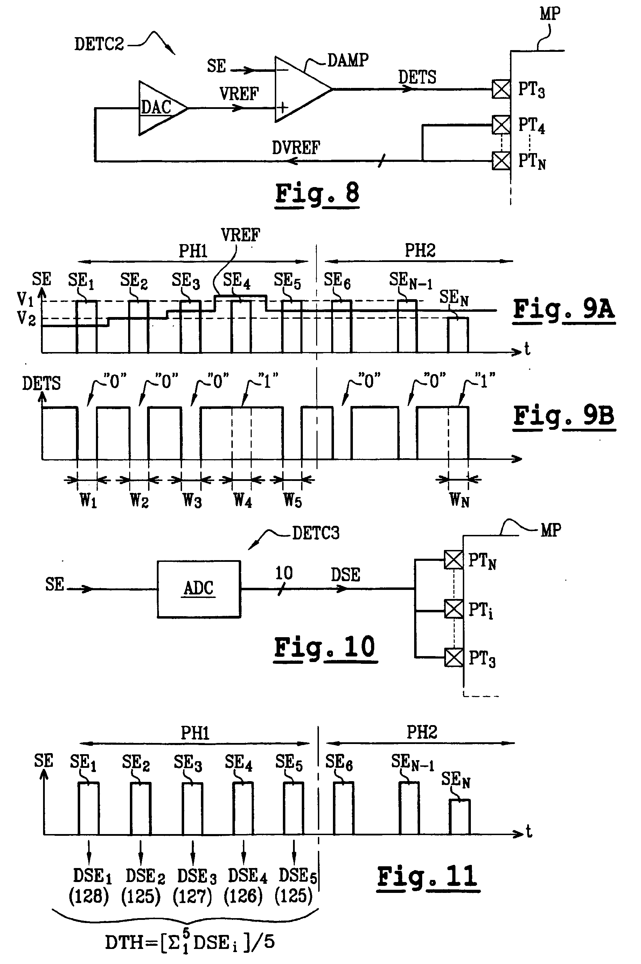

Dans le mode de réalisation représenté en figure 8, le circuit de surveillance DETC2 comprend l'amplificateur différentiel DAMP agencé en comparateur et un convertisseur numérique-analogique DAC. L'amplificateur DAMP reçoit sur son entrée négative le signal d'enveloppe SE, sur son entrée positive le signal VREF, et délivre le signal de détection DETS. Le signal VREF est délivré ici par le convertisseur DAC qui reçoit en entrée un signal numérique DVREF délivré par des ports PT4 à PT_{N} du microprocesseur, via une liaison représentée en traits pointillés en figure 3, chaque port PT4 à PT_{N} délivrant un bit du signal DVREF. Le signal DVREF est une valeur d'amplitude numérique et l'amplitude du signal VREF est fonction de la valeur d'amplitude DVREF.

L'utilisation du circuit de surveillance DETC2 nécessite un ajustage préalable du signal VREF, comme illustré sur les figures 9A et 9B. La figure 9A illustre l'aspect des signaux SE et VREF pendant une phase d'ajustage PH1 suivie d'une phase de détection PH2, et la figure 9B représente le signal DETS. On considère dans cet exemple que le lecteur émet cinq impulsions de champ magnétique pendant la phase PH1, faisant apparaître cinq impulsions d'enveloppe SE1 à SE5. Le microprocesseur augmente progressivement, par incréments, la valeur d'amplitude DVREF jusqu'à ce que le signal VREF devienne supérieur au signal d'enveloppe SE et que le signal DETS passe à 1 dans l'une des cinq fenêtres de surveillance W1, W2... W5 correspondant aux cinq impulsions d'enveloppe. Dans cet exemple, l'amplitude du signal VREF dépasse celle du signal d'enveloppe pendant l'impulsion d'enveloppe SE4 et le signal DETS passe à 1 dans la fenêtre de surveillance W4. Le microprocesseur diminue ensuite d'un incrément la valeur DVREF, de sorte qu'à l'impulsion suivante, ici l'impulsion SE5, le signal DETS est à 0 dans la fenêtre de surveillance W5. Le signal VREF est ainsi calibré avec une amplitude sensiblement inférieure à V1. La phase de détection PH2 commence à l'impulsion SE6. Lorsque apparaît l'impulsion SE_{N} d'amplitude V2 inférieure à V1, le signal VREF est supérieur à l'amplitude V2 de sorte que le signal DETS est à 1 dans la fenêtre de surveillance de rang N au lieu d'être à 0.

Comme précédemment, la mise en oeuvre du procédé de l'invention implique une programmation correspondante du microprocesseur qui est en soi à la portée de l'homme de l'art.

Dans le mode de réalisation représenté en figure 10, le circuit de surveillance DECT3 comprend simplement un convertisseur analogique-numérique ADC et la surveillance proprement dite des impulsions d'enveloppe est assurée ici par le microprocesseur. Le convertisseur ADC reçoit ainsi en entrée le signal d'enveloppe SE et délivre une valeur d'amplitude numérique DSE qui est appliquée sur des ports du microprocesseur. La valeur DSE est par exemple codée sur 10 bits et appliqué sur dix ports PT3 à PT_{N}.

Ce mode de réalisation du procédé de l'invention comprend également une phase d'ajustage PH1, visant ici à calibrer un seuil numérique DTH permettant au microprocesseur de faire la distinction entre les amplitudes V1 et V2 des impulsions d'enveloppe.

Un exemple de phase PH1 est illustré sur la figure 11, qui représente l'aspect du signal SE. On considère comme précédemment que le lecteur émet cinq impulsions de champ magnétique pendant la phase PH1, faisant apparaître cinq impulsions d'enveloppe SE1 à SE5. A chaque impulsion, le microprocesseur reçoit une valeur d'amplitude correspondante DSE, soit des valeurs DSE1, DSE2, DSE3, DSE4, DSE5, par exemple 128, 125, 127, 126 et 125. Au terme de la phase PH1, le microprocesseur calcule le seuil numérique DTH, par exemple en calculant la valeur moyenne DSEa des valeurs DSE1 à DSE5 (soit ici 126,2) et en lui appliquant un coefficient modérateur, par exemple 0,95. La phase de détection PH2 commence à l'impulsion SE6 et le microprocesseur compare la valeur d'amplitude de chaque impulsion d'enveloppe avec le seuil DTH. Lorsque apparaît l'impulsion d'enveloppe SE_{N} d'amplitude V2, la valeur d'amplitude correspondante DSE_{N} est inférieure au seuil DTH et le microprocesseur en déduit la présence d'un circuit intégré sans contact.

Comme précédemment, la mise en oeuvre du procédé de l'invention implique une programmation du microprocesseur qui est en soi à la portée de l'homme de l'art.

Ce mode de réalisation du procédé de l'invention est susceptible de diverses variantes.

Selon une variante, le microprocesseur calcule la valeur moyenne DSEa des valeurs d'amplitude dans une fenêtre temporelle glissante comprenant les N dernières impulsions du signal d'enveloppe, par exemple les cinq dernières impulsions, et rafraîchit en permanence le seuil DTH. A chaque nouvelle impulsion, le microprocesseur compare la valeur d'amplitude DSEi de la dernière impulsion du signal d'enveloppe avec le seuil DTH. Si la nouvelle valeur d'amplitude DSEi n'est pas inférieure au seuil DTH, elle est incorporée dans la valeur moyenne DSEa et une nouvelle valeur du seuil DTH est calculée. Dans le cas contraire, le microprocesseur considère qu'un circuit intégré est détecté.

Selon une autre variante, le microprocesseur calcule à chaque nouvelle impulsion une variation d'amplitude ΔDSE égale à la différence entre la valeur moyenne DSEa et la valeur d'amplitude DSEi de la dernière impulsion du signal d'enveloppe, soit ΔDSE = DSEa-DSEi, "i" étant un indice. La variation d'amplitude ΔDSE est comparée à un seuil prédéterminé DTHD, qui est ici un seuil différentiel, par exemple un pourcentage de la valeur moyenne DSEa. Si la variation ΔDSE est inférieure au seuil DTHD, elle n'est pas considérée comme significative et la nouvelle valeur d'amplitude DSEi est incorporée dans la valeur moyenne DSEa. Si au contraire la variation ΔDSE est supérieure au seuil DTHD, le microprocesseur considère qu'un circuit intégré est détecté.

D'autre part, il est envisageable de prendre en compte une hypothèse prévue par la demanderesse, selon laquelle l'apparition du circuit intégré sans contact dans le périmètre de communication du lecteur peut provoquer une augmentation temporaire de l'amplitude du signal d'enveloppe, suivie d'une diminution. Sous réserve d'essais plus approfondis, un tel phénomène pourrait se produire lorsqu'il existe une relation déterminée entre la fréquence propre du circuit d'antenne d'un circuit intégré sans contact et la fréquence propre du circuit d'antenne d'un lecteur.

Bien que ce cas puisse être considéré comme exceptionnel, il entre dans le cadre de la présente invention de prévoir à toutes fins utiles une détection des variation d'amplitude du signal d'enveloppe dans laquelle le signe des variations n'est pas pris en compte. Ceci implique encore une autre variante de réalisation du procédé décrit ci-dessus, dans laquelle on considère qu'un circuit intégré est détecté quand DSEi > DSEa, ce qui correspond à une variation ΔDSE négative si par définition ΔDSE = DSEa-DSEi, ou une variation ΔDSE positive si par définition ΔDSE = DSEi-DSEa.

En pratique, une surveillance du signal d'enveloppe ne portant que sur la valeur absolue de la variation ΔDSE permet de prendre compte simultanément une augmentation ou une diminution de la valeur d'amplitude au-delà du seuil DTHD. Dans ce cas, un circuit intégré est présumé détecté quand l'amplitude du signal d'enveloppe baisse soudainement ou lorsqu'elle augmente brusquement.

Les circuits de détection décrits plus haut, faisant intervenir un comparateur, sont susceptibles de variantes correspondantes en utilisant par exemple deux comparateurs et deux signaux de référence VREF1, VREF2, l'un étant supérieur et l'autre inférieur à l'amplitude du signal d'enveloppe en l'absence du circuit intégré sans contact à détecter.

D'autre part, il convient de noter que le procédé selon l'invention permet de faire une "pré-détection" de circuit intégré plutôt qu'une détection complète et certaine comme le permet la réception d'un message d'identification. Un lecteur mettant en oeuvre le procédé selon l'invention est en effet susceptible d'être induit en erreur par l'introduction d'un objet métallique dans le voisinage du lecteur, par exemple une pièce de monnaie, provoquant une diminution du signal d'enveloppe. C'est pourquoi, lorsqu'un circuit intégré est présumé détecté au moyen du procédé de l'invention, le lecteur s'en assure en envoyant ensuite une salve de champ magnétique permettant au circuit intégré sans contact d'envoyer un message d'identification, précédé ou non d'une requête en identification. La réception du message d'identification permet de confirmer ou non la présence du circuit intégré et le cas échéant d'engager une communication.

Enfin, bien que l'on ait indiqué au préambule que l'objectif de la présente invention était d'économiser la consommation de courant d'un lecteur ayant un système d'alimentation autonome, tel une batterie ou une pile, il va de soi que la présente invention peut être implémentée dans tout type de lecteur, y compris ceux qui sont alimentés par le secteur. De façon générale, un lecteur selon l'invention peut être commercialisé avec, dans son programme d'exploitation, une option "gestion de mode de veille active" que l'utilisateur a le choix d'activer ou non en fonction de l'application visée.

## Revendications

1. Lecteur de circuit intégré sans contact comprenant une bobine d'antenne accordée (L1) pour émettre un champ magnétique oscillant et des moyens de détection de la présence d'un circuit intégré sans contact (5) comportant une bobine d'antenne (L2) dans un périmètre de communication du lecteur, les moyens de détection comprenant :
- des moyens (MP, L1) pour émettre des impulsions de champ magnétique (P1-P_{N}) de courte durée,
- des moyens (D1, F1) pour extraire de la bobine d'antenne un signal d'enveloppe (SE) présentant des impulsions d'enveloppe (SE1-SE_{N}) correspondant aux impulsions de champ magnétique, et
- des moyens (DETC, DAMP, ADC, DAC, MP) de surveillance de l'amplitude des impulsions d'enveloppe,
**caractérisé en ce que** les moyens de surveillance sont agencés pour détecter un objet dont l'introduction dans le périmètre de communication du lecteur désaccorde sensiblement la bobine d'antenne (L2) du lecteur de circuit intégré, et comprennent à cet effet des moyens (DAMP, ADC, MP, DAC, D2, C4) pour :
- au cours d'une phase d'étalonnage (PH1), déterminer un seuil de détection (VREF, DTH) à partir de la valeur moyenne que présente l'amplitude des impulsions d'enveloppe, de manière que l'amplitude des impulsions d'enveloppe pendant la phase d'étalonnage se trouve sensiblement au-dessus du seuil de détection tout en étant très proche du seuil de détection, et
- au cours d'une phase de détection (PH2) détecter (DETS) au moins une impulsion d'enveloppe ayant une amplitude inférieure au seuil de détection, pour en déduire qu'un objet a été introduit dans le périmètre de communication relativement au moment où la phase d'étalonnage a été conduite,
le lecteur étant agencé pour envoyer une requête en identification lorsqu'une impulsion d'enveloppe présente une amplitude en dessous du seuil de détection, afin de déterminer si l'objet ayant pénétré dans le périmètre de communication est un circuit intégré sans contact ou non.

2. Lecteur selon la revendication 1 dans lequel les moyens de surveillance émettent des impulsions de champ magnétique de très courte durée, inférieure à une durée nécessaire à un circuit intégré sans contact pour extraire de l'énergie électrique du champ magnétique et consommer cette énergie électrique.

3. Lecteur selon la revendication 1 dans lequel les moyens de surveillance émettent des impulsions de champ magnétique d'une durée inférieure ou égale à 100 microsecondes.

4. Lecteur selon l'une des revendications 1 à 3, dans lequel les moyens de surveillance comprennent des moyens (DAC, MP) pour comparer des variations d'amplitude des impulsions d'enveloppe à un seuil de variation (DTHD) qui est déterminé relativement à la valeur moyenne des impulsions.

5. Lecteur selon l'une des revendications 1 à 3, dans lequel les moyens de surveillance comprennent des moyens de comparaison (DAMP, ADC, MP) pour comparer l'amplitude des impulsions d'enveloppe au seuil de détection (VREF, DTH).

6. Lecteur selon la revendication 5, dans lequel les moyens de surveillance comprennent des moyens (MP) pour fournir un seuil de détection numérique (DVREF) et un convertisseur numérique analogique (DAC) pour transformer le seuil de détection numérique en un seuil de détection analogique (VREF) fournit aux moyens de comparaison.

7. Lecteur selon la revendication 5, dans lequel les moyens de surveillance comprennent un condensateur (C5) et des moyens (D2) pour charger le condensateur à partir des impulsions d'enveloppe, afin d'obtenir le seuil de détection (VREF).

8. Lecteur selon l'une des revendications 1 à 3, comprenant :
- un convertisseur analogique/numérique (ADC) pour convertir les impulsions d'enveloppe (SE1-SE_{N}) en un signal d'amplitude numérique (DSE) comprenant des valeurs d'amplitude (DSE1-DSE_{N}) représentatives de l'amplitude des impulsions d'enveloppe, et
- des moyens (MP) pour calculer pendant la phase d'étalonnage une valeur moyenne des valeurs d'amplitude numérique (DSE, DSE1-DSE_{N}), en déduire une valeur de seuil de détection numérique (DTH) en appliquant à la valeur moyenne un coefficient modérateur et, pendant la phase de détection, comparer les valeurs d'amplitude numérique à la valeur de seuil numérique.

9. Lecteur selon la revendication 8, dans lequel les moyens de surveillance sont agencés pour ajuster en temps réel le seuil numérique (DTH) en utilisant les valeurs d'amplitude des impulsions d'enveloppe correspondant à N dernières impulsions de champ magnétique émises.

10. Procédé pour détecter la présence d'un circuit intégré sans contact comportant une bobine d'antenne (L2) dans un périmètre de communication d'un lecteur de circuit intégré sans contact comprenant une bobine d'antenne accordée (L1) pour émettre un champ magnétique oscillant, procédé comprenant les étapes consistant à :
- émettre des impulsions de champ magnétique (P1-P_{N}) de courte durée,
- extraire de la bobine d'antenne un signal d'enveloppe (SE) présentant des impulsions d'enveloppe (SE1-SE_{N}) correspondant aux impulsions de champ magnétique, et
- surveiller l'amplitude des impulsions d'enveloppe,
procédé **caractérisé en ce que** l'étape de surveillance des impulsions d'enveloppe comprend :
- une phase d'étalonnage (PH1) pour déterminer un seuil de détection (VREF, DTH) à partir de la valeur moyenne que présente l'amplitude des impulsions d'enveloppe, de manière que l'amplitude des impulsions d'enveloppe pendant la phase d'étalonnage se trouve sensiblement au-dessus du seuil de détection tout en étant très proche du seuil de détection, et
- une phase de détection (PH2) pour détecter (DETS) au moins une impulsion d'enveloppe ayant une amplitude inférieure au seuil de détection, pour en déduire qu'un objet a été introduit dans le périmètre de communication relativement au moment où la phase d'étalonnage a été conduite,
et comprenant l'envoi d'une requête en identification lorsqu'une impulsion d'enveloppe présente une amplitude en dessous du seuil de détection, afin de déterminer si l'objet ayant pénétré dans le périmètre de communication est un circuit intégré sans contact ou non.

11. Procédé selon la revendication 10, comprenant l'émission d'impulsions de champ magnétique d'une durée inférieure à une durée nécessaire à un circuit intégré sans contact pour extraire de l'énergie électrique du champ magnétique et consommer cette énergie électrique.

12. Procédé selon la revendication 10, comprenant l'émission d'impulsions de champ magnétique d'une durée inférieure ou égale à 100 microsecondes.

13. Procédé selon l'une des revendications 10 à 12, dans lequel un objet est détecté lorsque l'amplitude des impulsions d'enveloppe présente une variation (ΔDSE) supérieure à un seuil de variation (DTHD) qui est déterminé relativement à la valeur moyenne des impulsions.

14. Procédé selon l'une des revendications 10 à 13, dans comprenant les étapes suivantes :
- générer un seuil de détection (VREF) d'amplitude déterminée, et
- pendant la phase d'étalonnage, ajuster l'amplitude du seuil (VREF) pour qu'elle soit inférieure à l'amplitude des impulsions d'enveloppe (SE1-SE_{N}).

15. Procédé selon l'une des revendications 10 à 13, dans lequel le seuil de détection (VREF) est une tension prélevée sur une borne d'un condensateur (C5) chargé au moyen des impulsions d'enveloppe.

16. Procédé selon l'une des revendications 10 à 13, comprenant les étapes suivantes :
- convertir les impulsions d'enveloppe (SE1-SE_{N}) en un signal d'amplitude numérique (DSE) comprenant des valeurs d'amplitude (DSE1-DSE_{N}) représentatives de l'amplitude des impulsions d'enveloppe, et
- calculer pendant la phase d'étalonnage une valeur moyenne des valeurs d'amplitude numérique (DSE, DSE1-DSE_{N}), en déduire une valeur de seuil de détection numérique (DTH) en appliquant à la valeur moyenne un coefficient modérateur, et
- pendant la phase de détection, comparer les valeurs d'amplitude numérique à la valeur de seuil numérique.

17. Procédé selon la revendication 16, dans lequel le seuil de détection (DTH) est ajusté en temps réel en utilisant les valeurs d'amplitude des impulsions d'enveloppe correspondant à N dernières impulsions de champ magnétique émises.

## Claims

1. Contactless integrated circuit reader comprising a tuned antenna coil (L1) to emit an oscillating magnetic field and means for detecting the presence of a contactless integrated circuit (5) comprising an antenna coil (L2) in a communication perimeter of the reader, the detection means comprising:
- means (MP, L1) for emitting short magnetic field pulses (P1 - P_{N}),
- means (D1, F1) for extracting, from the antenna coil, an envelope signal (SE) having envelope pulses (SE1-SE_{N}) corresponding to the magnetic filed pulses, and
- means (DETC, DAMP, ADC, DAC, MP) for monitoring the amplitude of the envelope pulses,
**characterised in that** the monitoring means are arranged to detect an object which substantially detunes the antenna coil (L2) of the integrated circuit reader when it enters the communication perimeter of the reader, and comprises, to that end, means (DAMP, ADC, MP, DAC, D2, C4) for:
- during a calibration phase (PH1), determining a detection threshold (VREF, DTH) from the average value of the amplitude of envelope pulses, so that the amplitude of the envelope pulses during the calibration phase is substantially superior to the detection threshold and is very near the detection threshold as well, and
- during a detection phase (PH2), detecting (DETS) at least one envelope pulse which amplitude is inferior to the detection threshold, so as to deduce that an object entered the communication perimeter in relation to the moment when the calibration phase was performed,
the reader being arranged to send an identification request when an envelope pulse has an amplitude inferior to the detection threshold, so as to determine whether the object which entered the communication perimeter is a contactless integrated circuit or not.

2. Reader according to claim 1, wherein the monitoring means emit very short magnetic field pulses, which duration is inferior to a duration required by a contactless integrated circuit to extract electric energy from the magnetic field and consume this electric energy.

3. Reader according to claim 1, wherein the monitoring means emit magnetic field pulses which duration is inferior or equal to 100 microseconds.

4. Reader according to one of claims 1 to 3, wherein the monitoring means comprise means (DAC, MP) for comparing variations of amplitude of the envelope pulses to a variation threshold (DTHD) which is determined in relation to the average value of the pulses.

5. Reader according to one of claims 1 to 3, wherein the monitoring means comprise comparison means (DAMP, ADC, MP) for comparing the amplitude of the envelope pulses to the detection threshold (VREF, DTH).

6. Reader according to claim 5, wherein the monitoring means comprise means (MP) for supplying a digital detection threshold (DVREF) and a digital to analog converter (DAC) to transform the digital detection threshold in an analogical detection threshold (VREF) supplied to the comparison means.

7. Reader according to claim 5, wherein the monitoring means comprise a capacitor (CS) and means (D2) for charging the capacitor from the envelope pulses, in order to obtain the detection threshold (VREF).

8. Reader according to one of claims 1 to 3, comprising:
- an analog to digital converter (ADC) to convert the envelope pulses (SE1-SE_{N}) into a digital amplitude signal (DSE) comprising amplitude values (DSE1-DSE_{N}) representative of the amplitude of envelope pulses, and
- means (MP) for calculating, during the calibration phase, an average value of the digital amplitude values (DSE, DSE1-DSE_{N}), deducing a value of digital detection threshold (DTH) while applying to the average value a moderating coefficient and, during the detection phase, comparing the digital amplitude values to the digital threshold value.

9. Reader according to claim 8, wherein the monitoring means are arranged to adjust the digital threshold (DTH) in real time by using the amplitude values of envelope pulses corresponding to N last magnetic field pulses emitted.

10. Method for detecting the presence of a contactless integrated circuit comprising an antenna coil (L2) in a communication perimeter of a contactless integrated circuit reader comprising a tuned antenna coil (L1) to emit an oscillating magnetic field, method comprising the steps of:
- emitting short magnetic field pulses (P1-P_{N}),
- extracting from the antenna coil an envelope signal (SE) having envelope pulses (SE1-SE_{N}) corresponding to the magnetic field pulses, and
- monitoring the amplitude of envelope pulses,
**characterised in that** the step of monitoring envelope pulses comprises:
- a calibration phase (PH1) to determine a detection threshold (VREF, DTH) from the average value of the amplitude of envelope pulses, so that the amplitude of envelope pulses during the calibration phase is substantially superior to the detection threshold and very near the detection threshold as well, and
- a detection phase (PH2) to detect (DETS) at least one envelope pulse which amplitude is inferior to the detection threshold, so as to deduce that an object entered the communication perimeter in relation to the moment when the calibration phase was performed,
and comprising sending an identification request when an envelope pulse has an amplitude inferior to the detection threshold, in order to determine whether the object which entered the communication perimeter is a contactless integrated circuit or not.

11. Method according to claim 10, comprising sending magnetic field pulses which duration is inferior to a duration required for a contactless integrated circuit to extract electrical energy from the magnetic field and consume this electrical energy.

12. Method according to claim 10, comprising sending magnetic field pulses which duration is inferior or equal to 100 microseconds.

13. Method according to one of claims 10 to 12, wherein an object is detected when the amplitude of envelope pulses has a variation (ΔDSE) superior to a variation threshold (DTHD) which is determined in relation to the average value of pulses.

14. Method according to one of claims 10 to 13, comprising steps of:
- generating a detection threshold (VREP) of determined amplitude, and
- during the calibration phase, adjusting the amplitude of the threshold (VREF) so that it is inferior to the amplitude of envelope pulses (SE1- SE_{N}).

15. Method according to one of claims 10 to 13, wherein the detection threshold (VREF) is a voltage taken on a terminal of a capacitor (CS) charged by means of envelope pulses.

16. Method according to one of claims 10 to 13, comprising the steps of:
- converting the envelope pulses (SE1- SE_{N}) into a digital amplitude signal (DSE) comprising amplitude values (DSE1- DSE_{N}) representative of the amplitude of the envelope pulses, and
- calculating, during the calibration phase, an average value of the digital amplitude values (DSE, DSE1- DSE_{N}), deducing a digital detection threshold value (DTH) while applying a moderating coefficient to the average value, and
- during the detection phase, comparing the digital amplitude values to the digital threshold value.

17. Method according to claim 16, wherein the detection threshold (DTH) is adjusted in real time by using the amplitude values of envelope pulses corresponding to N last magnetic field pulses emitted.

## Patentansprüche

1. Kontaktloser integrierter Schaltungsleser, der eine abgestimmte Antennenspule (L1) zum Aussenden eines oszillierenden Magnetfelds und Mittel zum Ermitteln des Vorhandenseins einer kontaktlosen integrierten Schaltung (5) umfasst, die eine Antennenspule (L2) in einem Kommunikationsumkreis des Lesers umfasst, wobei die Ermittlungsmittel Folgendes umfassen:
- Mittel (MP, L1) zum Aussenden von Magnetfeldimpulsen (P1-P_{*N*}) kurzer Dauer,
- Mittel (D1, F1) zum Extrahieren eines Hüllkurvensignals (SE), das Hüllkurvenimpulse (SE1-SE_{*N*}) aufweist, die Magnetfeldimpulsen entsprechen, von der Antennenspule, und
- Mittel (DETC, DAMP, ADC, DAC, MP) zur Überwachung der Amplitude der Hüllkurvenimpulse,
**dadurch gekennzeichnet, dass** die Überwachungsmittel eingerichtet sind, um einen Gegenstand zu ermitteln, dessen Einführung in den Kommunikationsumkreis des Lesers die Abstimmung der Antennenspule (L2) des integrierten Schaltungslesers merklich stört, und zu diesem Zweck Mittel (DAMP, ADC, MP, DAC, D2, C4) umfassen, um:
- während einer Eichungsphase (PH1) ausgehend vom Mittelwert, den die Amplitude der Hüllkurvenimpulse darstellt, eine Ermittlungsschwelle (VREF, DTH) zu bestimmen, derart, dass die Amplituden der Hüllkurvenimpulse sich während der Eichungsphase merklich oberhalb der Ermittlungsschwelle befinden während sie sehr nahe an der Ermittlungsschwelle sind, und
- während einer Ermittlungsphase (PH2) mindestens einen Hüllkurvenimpuls zu ermitteln (DETS), der eine Amplitude unterhalb der Ermittlungsschwelle hat, um daraus abzuleiten, dass ein Gegenstand in Bezug auf den Moment, in dem die Eichungsphase durchgeführt wurde, in den Kommunikationsumkreis eingeführt wurde,
wobei der Leser eingerichtet ist, um eine Identifikationsanfrage zu senden, wenn ein Hüllkurvenimpuls eine Amplitude unterhalb der Ermittlungsschwelle aufweist, um zu bestimmen, ob der Gegenstand, der in den Kommunikationsumkreis eingedrungen ist, eine kontaktlose integrierte Schaltung ist oder nicht.

2. Leser nach Anspruch 1, in dem die Überwachungsmittel Magnetfeldimpulse von einer sehr kurzen Dauer aussenden, die geringer als eine Dauer ist, die für eine kontaktlose integrierte Schaltung notwendig ist, um elektrische Energie vom Magnetfeld zu extrahieren und diese elektrische Energie zu verbrauchen.

3. Leser nach Anspruch 1, in dem die Überwachungsmittel Magnetfeldimpulse von einer Dauer von weniger als oder gleich 100 Mikrosekunden aussenden.

4. Leser nach einem der Ansprüche 1 bis 3, in dem die Überwachungsmittel Mittel (DAC, MP) zum Vergleichen von Amplitudenschwankungen der Hüllkurvenimpulse mit einer Schwankungsschwelle (DTHD), die in Bezug auf den Mittelwert der Impulse bestimmt wird, umfassen.

5. Leser nach einem der Ansprüche 1 bis 3, in dem die Überwachungsmittel Vergleichsmittel (DAMP, ADC, MP) zum Vergleichen der Amplitude der Hüllkurvenimpulse mit der Ermittlungsschwelle (VREF, DTH) umfassen.

6. Leser nach Anspruch 5, in dem die Überwachungsmittel Mittel (MP) zum Bereitstellen einer digitalen Ermittlungsschwelle (DVREF) und einen Digital/Analogwandler (DAC) zum Umwandeln der digitalen Ermittlungsschwelle in eine für die Vergleichsmittel bereitgestellte analoge Ermittlungsschwelle (VREF) umfassen.

7. Leser nach Anspruch 5, in dem die Überwachungsmittel einen Kondensator (C5) und Mittel (D2) zum Laden des Kondensators ausgehend von Hüllkurvenimpulsen umfassen, um die Ermittlungsschwelle (VREF) zu erhalten.

8. Leser nach einem der Ansprüche 1 bis 3, der Folgendes umfasst:
- einen Analog/Digitalwandler (ADC) zum Konvertieren der Hüllkurvenimpulse (SE1 - SE_{*N*}) in ein digitales Amplitudensignal (DSE), das Amplitudenwerte (DSE1 -DSE_{*N*}) umfasst, die die Amplitude der Hüllkurvenimpulse darstellen, und
- Mittel (MP) zum Berechnen eines Mittelwerts der digitalen Amplitudenwerte (DSE, DSE1-DSE_{*N*}) während der Eichungsphase, Ableiten eines digitalen Ermittlungsschwellenwerts (DTH) davon unter Anwendung eines Dämpfungskoeffizienten auf den Mittelwert und, während der Ermittlungsphase, Vergleichen der digitalen Amplitudenwerte mit dem digitalen Schwellenwert.

9. Leser nach Anspruch 8, in dem die Überwachungsmittel eingerichtet sind, um die digitale Schwelle (DTH) in Echtzeit unter Verwendung der Amplitudenwerte der Hüllkurvenimpulse, die den N letzten ausgesendeten Magnetfeldimpulsen entsprechen, einzurichten.

10. Verfahren zum Ermitteln des Vorhandenseins einer kontaktlosen integrierten Schaltung, die eine Antennenspule (L2) in einem Kommunikationsumkreis eines kontaktlosen integrierten Schaltungslesers umfasst, der eine abgestimmte Antennenspule (L1) zum Aussenden eines oszillierenden Magnetfelds umfasst, wobei das Verfahren die Schritte umfasst, die aus Folgendem bestehen:
- Aussenden von Magnetfeldimpulsen (P1-P_{*N*}) von kurzer Dauer,
- Extrahieren eines Hüllkurvensignals (SE), das die Hüllkurvenimpulse (SE1 - SE_{*N*}) darstellt, die den Magnetfeldimpulsen entsprechen, von der Antennenspule, und
- Überwachen der Amplitude der Hüllkurvenimpulse,
Verfahren, das **dadurch gekennzeichnet ist, dass** der Schritt der Überwachung der Hüllkurvenimpulse Folgendes umfasst:
- eine Eichungsphase (PH1) zum Bestimmen einer Ermittlungsschwelle (VREF, DTH) ausgehend vom Mittelwert, den die Amplitude der Hüllkurvenimpulse darstellt, derart, dass die Amplituden der Hüllkurvenimpulse sich während der Eichungsphase merklich oberhalb der Ermittlungsschwelle befinden während sie sehr nah an der Ermittlungsschwelle sind, und
- eine Ermittlungsphase (PH2) zum Ermitteln (DETS) mindestens eines Hüllkurvenimpulses, der eine Amplitude hat, die unterhalb der Ermittlungsschwelle liegt, um davon abzuleiten, dass ein Gegenstand in Bezug auf den Moment, in dem die Eichungsphase durchgeführt wurde, in den Kommunikationsumkreis eingeführt wurde,
und das Senden einer Identifikationsanfrage umfasst, wenn ein Hüllkurvenimpuls eine Amplitude unterhalb der Ermittlungsschwelle aufweist, um zu bestimmen, ob der Gegenstand, der in den Kommunikationsumkreis eingedrungen ist, eine integrierte Schaltung ist oder nicht.

11. Verfahren nach Anspruch 10, das das Aussenden von Magnetfeldimpulsen einer Dauer umfasst, die geringer ist als eine Dauer, die für eine kontaktlose integrierte Schaltung notwendig ist, um elektrische Energie vom Magnetfeld zu extrahieren und diese elektrische Energie zu verbrauchen.

12. Verfahren nach Anspruch 10, das das Aussenden von Magnetfeldimpulsen von einer Dauer von weniger als oder gleich 100 Mikrosekunden umfasst.

13. Verfahren nach einem der Ansprüche 10 bis 12, in dem ein Gegenstand ermittelt wird wenn die Amplitude der Hüllkurvenimpulse eine Schwankung (ΔDSE) aufweist, die größer als eine Schwankungsschwelle (DTHD) ist, die in Bezug auf den Mittelwert der Impulse bestimmt wird.

14. Verfahren nach einem der Ansprüche 10 bis 13, das die folgenden Schritte umfasst:
- Erzeugen einer Ermittlungsschwelle (VREF) einer bestimmten Amplitude, und
- Einrichten der Amplitude der Schwelle (VREF) während der Eichungsphase, damit sie niedriger ist als die Amplitude der Hüllkurvenimpulse (SE1-SE_{*N*}).

15. Verfahren nach einem der Ansprüche 10 bis 13, in dem die Ermittlungsschwelle (VREF) eine Spannung ist, die auf einem Anschluss eines Kondensators (C5) entnommen wird, der mittels Hüllkurvenimpulsen geladen wird.

16. Verfahren nach einem der Ansprüche 10 bis 13, das die folgenden Schritte umfasst:
- Konvertieren der Hüllkurvenimpulse (SE1-SE_{*N*}) in ein digitales Amplitudensignal (DSE), das Amplitudenwerte (DSE1-DSE_{*N*}) umfasst, die für die Amplitude der Hüllkurvenimpulse charakteristisch sind, und
- Berechnen eines Mittelwerts der digitalen Amplitudenwerte (DSE, DES1- DSE_{*N*}) während der Eichungsphase, Ableiten eines digitalen Ermittlungsschwellenwerts (DTH) davon unter Anwendung eines Dämpfungskoeffizienten auf den Mittelwert, und
- Vergleichen der digitalen Amplitudenwerte mit dem digitalen Schwellenwert während der Ermittlungsphase.

17. Verfahren nach Anspruch 16, in dem die Ermittlungsschwelle (DTH) in Echtzeit eingerichtet wird, indem die Amplitudenwerte der Hüllkurvenimpulse verwendet werden, die den N letzten ausgesendeten Magnetfeldimpulsen entsprechen.
